# EUROPEAN PATENT SPECIFICATION

(11) **EP 4 323 698 B1**
(45) Date of publication and mention of the grant of the patent: **06.05.2026**
(21) Application number: 22723600.7
(22) Date of filing: 19.04.2022
(51) Int. Cl.: F24D 3/08, F28D 20/00, F16L 5/14

(54) **LOW LOSS SENSIBLE HEAT STORAGE**
VERLUSTARMER SPEICHER FÜR FÜHLBARE WÄRME
STOCKAGE DE CHALEUR SENSIBLE À FAIBLE PERTE

(30) Priority: 15.04.2021 EP 21168624; 19.11.2021 EP 21209335
(43) Date of publication of application: 21.02.2024
(73) Proprietor: Newton Energy Solutions Holding B.V., 2628 XH Delft (NL)
(72) Inventor: VAN VLIET, Laurens Daniël, 2595 DA 's-Gravenhage (NL); MOHANA, Martin, 2595 DA 's-Gravenhage (NL); BODIS, Pavol, 2595 DA 's-Gravenhage (NL); FISCHER, Michel, 76571 Gaggenau (DE); SCHANSKER, Fabian, 76571 Gaggenau (DE); KERSPE, Jobst, 76571 Gaggenau (DE)
(74) Representative: V.O.
(86) International application number: PCT/EP2022/060279
(87) International publication number: WO 2022/219199

(56) References cited:
- CH-A1- 702 484
- DE-A1- 102005 048 656
- DE-A1- 19 608 405
- GB-A- 2 493 388
- US-A1- 2006 201 454
- US-B2- 6 742 480

## Description

The invention is in the field of energy storage. The invention is in particular directed to an apparatus for thermal storage and its use in hot water systems.

There is a general increase in the use of alternative energy sources such as solar, wind and hydro-powered as society is moving away from fossil-fuel based energy. However, these alternative energy sources generally depend on the amount of available sunlight, wind, water etc. Therefore, the supply of these energy from the alternative sources are typically fluctuating and a misbalance occurs between the supply and demand.

A challenge in the field is the prolonged energy storage with a minimal heat loss. This is particularly challenging for sensible heat storage apparatuses. In sensible heat storage, heat is stored in material using the intrinsic heat capacity (Cp) of the material. In contrast to latent heat storage and thermochemical storage, the material in sensible heat storage typically does not undergo a chemical and/or phase change. Sensible heat storage has the advantage over thermochemical heat storage and latent heat storage that it allows for relatively simple systems as no multiphase physics, complex kinetics etc. are involved. One method for storing sensible heat is in the form of hot water tanks.

Hot water tank technology may suffer from reduced stored energy as there are typically heat losses over time due to the temperature difference between the environment and the temperature of the internal volume of the tank. Conventional sensible heat storage vessels may suffer from heat losses of 30% to 80% per weak under ideal testing conditions. Long-term storage of heat for multiple days may therefore be challenging.

An example to minimize heat losses in a hot water tank is disclosed in US4286573 where a heat trap assembly is disclosed to prevent heat loss in the cold water inlet and hot water outlet piping systems.

Another example is disclosed in US9476599 where a hot water storage unit is disclosed comprising a relief device to improve on a pressure temperature relief valve which has been associated with heat loss.

A further example of a storage tank is disclosed in CH702484. Herein a thermal stratified storage tank is disclosed with the aim to slow down the flow rate within the tank to an extent that stratification of the liquid medium by purely physical forces and improved utilization of heating energy is possible.

Further methods to minimize heat losses include the addition of insulation layers around the vessels. However, there are typically still significant heat losses that reduce the storage time of the energy.

Another heat storage tank is described by Thomas Beikircher (Vacuum tank stores heat, BINE-Projectinfo 14/2014), which discloses a vacuum insulated tank that can store heat for a prolonged time. The space between an inner and outer vessel is filled with perlite and placed under vacuum. However, as perlite is a naturally occurring mineral of volcanic origin and typically produces gas over time. This gas may be damaging the vacuum resulting in an increased heat loss. Further, the tank accordingly may require regular maintenance.

Other heat storage tanks are described in for instance US6742480 and US2006/201454. Herein, a passage to connect the tank body and outer environment is provided for the inlet and outlet of a fluid. It is desired to provide a sensible heat storage apparatus that does not suffer from one or more of the above-mentioned drawbacks of conventional heat storage apparatus.

The present inventors have surprisingly found that minimal heat loss may be achieved by providing a sensible heat storage apparatus that comprises at least a first and a second integrated connection that each form a single thermal bridge. More particularly, the present inventors found that the combination of integrated connections and the location of these integrated connections forming a thermal bridge is particularly beneficial for reducing heat loss. Accordingly, the stored heat may be stored over a prolonged time with minimal heat loss. This may allow for reduced peak loads on the electrical grid, since the misbalance between energy supply and demand can be limited. The stored heat in the sensible heat storage apparatus may for instance be put to use in domestic applications and/or industrial applications for *i.a.* the provision of hot water.
Figure 1 illustrates part of a preferred embodiment of the sensible heat storage apparatus comprising a fluid and one integrated connection.
Figure 2 illustrates part of the sensible heat storage apparatus comprising a stratification device.
Figure 3 illustrates a preferred embodiment of the sensible heat storage apparatus comprising three integrated connections.
Figures 4A-4F illustrate top views of several configurations for the integrated connections.
Figure 5 illustrates a preferred embodiment of the sensible heat storage apparatus comprising a stratification device and two integrated connections.
Figure 6 illustrates the experimentally obtained temperature in the internal volume of the sensible heat storage apparatus and the ambient temperature over time.
Figure 7 illustrates part of the sensible heat storage apparatus wherein the thermal insulation layer is sectionally thickened.
Figure 8 illustrates part of the sensible heat storage apparatus wherein the thermal insulation layer is locally thickened.

Thus, in a first aspect, the present invention is directed to a sensible heat storage apparatus (1) comprising
- an inner vessel (2) comprising an internal volume (3) adapted to comprise a fluid (4);
- an outer container (5) enclosing said inner vessel;
- a thermal insulation layer (6) between said inner vessel and said outer container;
- at least a first and a second integrated connection (71, 72) to connect the internal volume of said inner vessel to an outer environment through the thermal insulation layer;
wherein said integrated connections are adapted to each integrate and accommodate at least two individual sub-connections such that every integrated connection forms a single thermal bridge (8) between the inner vessel and outer container and wherein all thermal bridges are located in the bottom 75% of the total height of said outer container.

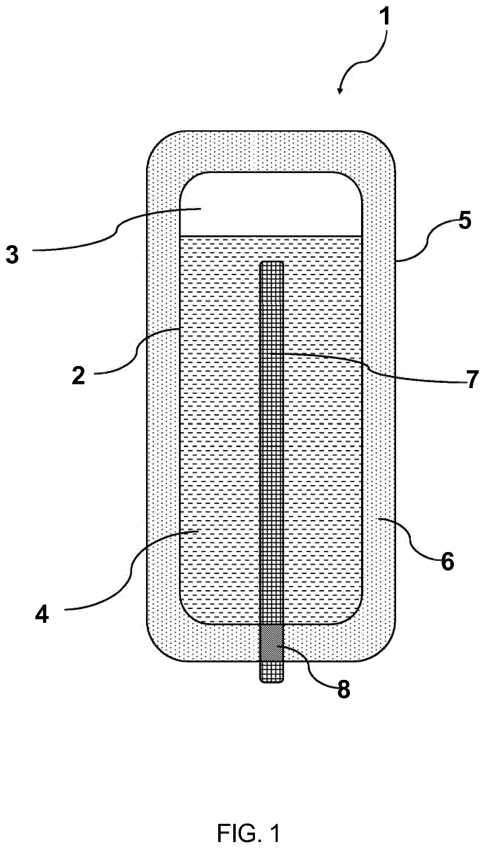

When the sensible heat storage apparatus is not installed and/or not operational, it may not contain the fluid. This is typically considered easier during storage, transportation and/or installation. When the sensible heat storage apparatus is operational or in use, it accordingly comprises the fluid in the internal volume. It is particularly preferred that the internal volume comprises glycol and/or water, more preferably water. Generally, water is a convenient heat storage medium for a sensible heat storage apparatus as it is non-toxic, low cost and readily available. Further, the stored water may be directly used for several applications, such as, but not limited to, domestic hot water, drinking water or as supply towards a fresh water station. Additionally, the heat storage apparatus may be combined with *i.a.* heat pump systems, gas boilers and other storage systems such as phase change material or thermochemical storage units. Figure 1 illustrates part of the sensible heat storage apparatus according to the present invention with one integrated connection and comprising a fluid.

For sake of conciseness and clarity, the apparatus is herein further described as if it were in use, *i.e.* with the fluid.

It is typically preferred that the inner vessel and outer vessel have a cylindrical shape as this shape may have an optimal surface to volume ratio. However, it may be appreciated that other shapes, such as square, rectangle, hexagonal, or other shapes are also feasible.

In general, temperature differences between the internal volume of the inner vessel and the temperature of the outer environment causes heat losses through *i.a.* radiation and/or convection. In order to minimize these heat losses, the sensible heat storage apparatus according to the present invention comprises a thermal insulation layer between the inner vessel and outer container. The term thermal insulation layer is herein used to describe a layer that has a lower thermal conductivity than the material of the inner vessel and outer container. It is preferred that the inner vessel and/or outer container comprise stainless steel.

In a preferred embodiment the thermal insulation layer comprises a vacuum insulation element. The vacuum between the inner vessel and outer container typically minimizes the heat losses through radiation and/or convection. A preferred vacuum insulation element and its preparation method is described in EP3225728 and has a thermal conductivity in the range of 0.001 W/mK and 0.004 W/mK at a residual gas pressure which is typically in the range of 0.1 to 1 mbar and a mean temperature between 50 and 300 °C. This vacuum insulation element is preferred as it is considered low-maintenance or even maintenance-free as the material typically does not produce any gas over time. Further, the vacuum may be stable for approximately 20 years or more, which may also increase the life time of the sensible heat storage apparatus.

A measure to minimize heat losses are the first and second integrated connections. In general, sensible heat storage apparatus have several separate connections that allow for individual liquid inlets, liquid outlets, thermometers, etc. Typically, such connections from the outside to the inside of the apparatus are enabled by providing a metal-based passthrough through the insulation layer thereby creating a metal to metal contact between the inner and outer vessels. Each of these connections may thus thermally connect the outer container and inner vessel and thereby create a thermal bridge. A thermal bridge is herein thus considered as a direct thermal contact between the inner vessel and outer container that has a higher thermal conductivity than the material of the thermal insulation layer. Accordingly, a thermal bridge is a path of relatively low heat resistance. This can have serious consequences on the heat storing capability of the apparatus as in typical well-insulated heat storage apparatus, the majority of the heat is lost through thermal bridges. The present invention is directed at minimizing the amount of thermal bridges.

The present inventors surprisingly found that providing at least the first and second integrated connections to connect the internal volume of the inner vessel to an outer environment through the thermal insulation layer is beneficial for a prolonged heat storage. The first integrated connection and the second integrated connection are adapted to integrate and accommodate a liquid port and at least one further sub-connection. The integrated connections are accordingly adapted to integrate and accommodate at least two individual sub-connections and each forms a single thermal bridge. Thus, by integrating and accommodating a plurality of sub-connections in an integrated connection, the number of thermal bridges can be reduced. The reduced number of thermal bridges may accordingly allow for minimal heat loss. It may be appreciated that the reduced number or minimal number of thermal bridges can be advantageous for various applications as long as there is a thermal insulation layer in place with a lower heat conductivity than the material of the inner vessel and outer container.

The sub-connections that are integrated and accommodated in the integrated connections can be any type of connection that is required to operate the apparatus. Typical examples of sub-connections include those selected from the group consisting of liquid ports such as heat coil in- and outlets, liquid inlets and liquid outlets, gas ports such as gas inlets and gas outlets, entry points for an anti-scaling device, entry points for a sensor, such as a temperature sensor, a pressure sensor, a magnetic field sensor, entry points for an electric heater and electric feedthroughs such as electricity in- and outlets for electrical heaters.

For instance, an integrated connection can be adapted to integrate and accommodate a gas port and a liquid port. This liquid port can be used as an outlet for hot fluid from the internal volume. It may be appreciated that the liquid outlet may also be thermally insulated to allow for a minimal heat loss from the fluid during the transportation from the internal volume to the destination. Alternatively, the liquid port may be used as inlet of the fluid to fill the internal volume. The fluid that is provided through the liquid inlet may for instance be a cold fluid to replace hot fluid that has been obtained from the internal volume. Alternatively or additionally, the fluid provided through the liquid inlet may be at an elevated temperature *(i.e.* above 20°C) and previously heated by an external system.

Preferably, the liquid ports in the first and second integrated connections are both adapted to fill and empty the internal volume of the inner vessel with the fluid.

One or more liquid ports may also be used to supply an internal heating coil that is positioned in the internal volume with a heat transfer fluid to provide heat energy to the fluid that is stored in the internal volume.

The gas port may for instance be used as an gas outlet. An gas outlet is typically provided as this allows for *i.a.* air to be removed and in this way more space for fluid to be stored in the internal volume may be created.

A further possibility for a sub-connection is an entry point for an anti-scaling device or an entry point for an electrical heater. The sub-connection may also be an entry point for a sensor. Examples of suitable sensors include, but are not limited to, a pressure sensor and a temperature sensor. It is particularly advantageous if the sub-connection is an entry point for a temperature sensor, as in conventional storage vessels several entry points are typically provided over the length of the vessel to measure the temperature of the fluid at several heights. In other words, in conventional storage vessels several thermal bridges are typically present over the length of the vessel and thus multiple paths for the heat to be lost are typically provided. In the present invention it is therefore preferred that the temperature sensor is a multi-point temperature sensor, preferably with at least two measuring points. Suitable multi-point temperature sensors are, for instance, thermocouples, or resistance temperature detector (RTD) devices such as a PT100 and/or a PT1000 RTD device. It may be appreciated that a combination of multiple temperature sensors may also be employed. The use of a multi-point temperature sensor allows for the measuring of the temperature at different heights within the internal volume without the need to provide multiple entry points over the length of the inner vessel. The temperature sensor preferably has at least four measuring points, more preferably at least five measuring points, most preferably the temperature sensor has at least six measuring points. The temperature sensor may be used to determine the state of charge of the sensible heat storage apparatus. The term "state of charge" is used to describe the amount of energy stored in the sensible heat storage apparatus. Nonetheless, it may be appreciated that any other means or combinations for measuring the temperature may also be feasible.

Another possibility is that the sub-connection is an electric feedthrough. An electric feedthrough can for instance be used to connect one or more electrical heaters and to provide electricity thereto. The electrical heater may accordingly be present in the internal volume and may be used to heat the fluid. Further, the electrical feedthrough may be used to connect and provide one or more heating coils with electricity. The heating coil may be at least partially present in the internal volume and may comprise a liquid inlet and liquid outlet, however this liquid does not enter the internal volume. Additionally, the liquid used for an optional heating coil may be different from the fluid present in the internal volume.

As detailed above, the use of an integrated connection may allow for a minimal number of thermal bridges and thus for reduced heat losses. The heat loss through thermal bridges is *i.a.* determined by the cross sectional area of the wall of the thermal bridge and the thermal conductivity of the material of the wall of the thermal bridge. Another factor that may play a role for the heat losses are the (local) temperature differences between the internal volume and the outer environment (*vide infra*). The thermal bridge is a direct thermal contact between the inner vessel and outer container, which is formed by an integrated connection. The material of the wall of the thermal bridge can thus be considered the material that is in direct contact with the inner vessel and the outer container, wherein the outside of the wall of the thermal bridge is in connection with the thermal insulation layer. In other words, if, for instance, the thermal bridge is a metal pipe between the inner vessel and outer container, the cross sectional area of the wall of this pipe is an important factor of the heat loss together with the thermal conductivity of the metal. Accordingly, it is preferred to minimize the cross sectional area of the wall. However, making the cross sectional area of the wall of the thermal bridge smaller typically results in several challenges. For instance, if the thermal bridge is provided for a liquid outlet and this is minimized, the flow rate for the liquid may not be sufficient. Another example is that when a thermal bridge is created to provide an entry for a temperature sensor, the size of this entry point cannot be reduced beyond the size of the temperature sensor. To reduce the size of the cross sectional area of the thermal bridge, the present inventors found that the total cross sectional area can be reduced by for instance a pipe-in-pipe configuration. The heat losses may then only be determined by the cross sectional area of the wall of the outer pipe, instead of the sum of the cross sectional areas of the walls of the individual pipes. In principle, the sum of the cross sectional area of the walls of the individual pipes is higher than the cross sectional area of the wall of an outer pipe in a pipe-in-pipe configuration, while keeping the internal area *(i.e.* the sum of the internal area of the individual pipes for e.g. liquid flow) constant.

The pipe-in-pipe configuration may be further beneficial for the manufacturability. More non-integrated connection are typically expensive and may lead to micro leakages to the thermal insulation layer. In other words, multiple connections through the insulation layer may present higher risks during manufacturing and thus increase the costs associated with the production. Using integrated connections and the preferred pipe-in-pipe configuration can improve on the manufacturability and may decrease any risks and costs.

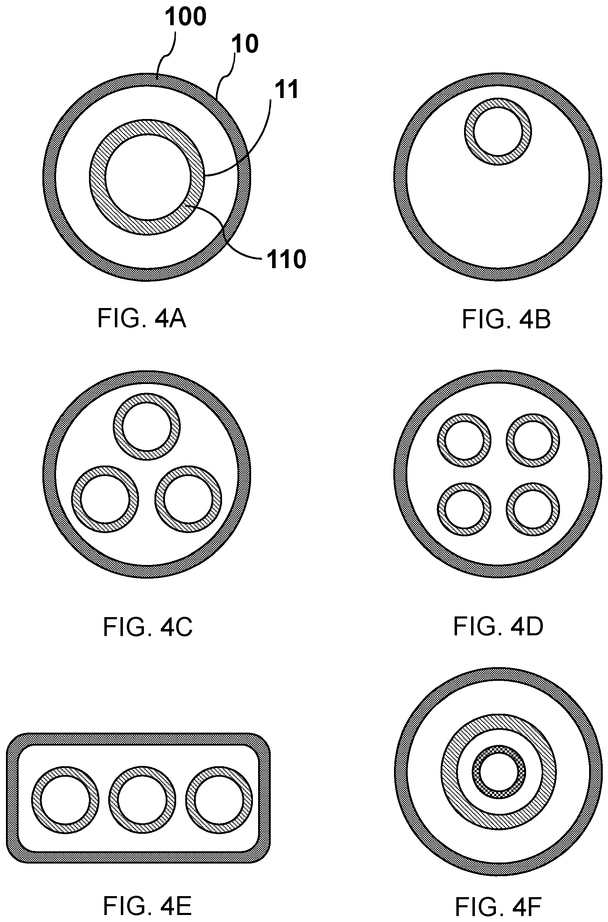

Accordingly, it is preferred that at least two individual sub-connections, such as the liquid port and the at least one further sub-connection, are integrated and accommodated in the at least first and/or second integrated connection via a pipe-in-pipe configuration, preferably a co-axial pipe-in-pipe configuration. Figures 4A-4F illustrate top views of suitable pipe-in-pipe configurations, Figures 4A-4D show this top view for suitable configurations with an increasing number of integrated and accommodated sub-connections.

Figure 4A illustrates a top view of the basic pipe-in-pipe principle wherein an outer pipe (10) having an outer-pipe wall (100) and an inner pipe (11) having an inner-pipe wall (110) are represented. As mentioned above, the at least one integrated connection connects the internal volume of the inner vessel to an outer environment through the thermal layer thereby forming a single thermal bridge (8) as *i.a.* illustrated in Figure 1. The single thermal bridge forms the direct thermal contact between the inner vessel and outer container. The outer pipe (10), particularly the outer-pipe wall (100) allows for thermal contact between the inner vessel and outer vessel. The outer pipe may however be longer than the distance between the inner vessel and the outer container and, for instance, part of the outer pipe may extend further into the internal volume. Accordingly, at least part of the outer pipe (10) can be considered a thermal bridge. More specifically, the thermal bridge is the part of the outer-pipe wall (100) that forms the direct thermal contact between the inner vessel and outer container. The length of the thermal bridge and thus the length of the part of the outer pipe forming the thermal bridge is accordingly limited to the distance between the inner vessel and outer container.

As the thermal bridge is determined by the outer pipe, more specifically by the outer-pipe wall, several other configurations are feasible, wherein a single outer pipe remains, but several inner pipers are incorporated. For instance, Figure 4B illustrates a pipe-in-pipe configuration wherein two inner pipes are located in an outer pipe. Similarly, Figure 4C illustrates a pipe-in-pipe configuration wherein three inner pipes are located in an outer pipe and Figure 4D illustrates the configuration for four inner pipes in an outer pipe. Preferably, the circumference of the pipes are of circular, but other shapes may nonetheless be possible such as square, oval and/or rectangular as for instance illustrated in Figure 4E for an outer pipe. Further, configurations wherein consecutive pipe-in-pipe configurations are present may also be suitable, as for instance illustrated in Figure 4F for a pipe-in-pipe-in-pipe configuration.

To further reduce heat loss, all the thermal bridges in the apparatus are located in the bottom 75% of the total height of the outer container, preferably in the bottom 50%, more preferably in the bottom 25%, most preferably in the bottom 10% of the total height of the outer container. Herein the total height of the outer container is meant as the total height of the wall of the outer container that encloses the inner vessel. In other words, if the outer container for instance is placed on legs or on a platform, these legs and platform may be part of the apparatus but do not contribute to the total height of the outer container. Having the thermal bridges located in the bottom 75% of the total height of the outer container is particularly beneficial for embodiments of the invention comprising a temperature gradient within the internal volume. It is even more particularly beneficial for embodiments wherein a fluid is used for which the density alters with temperatures over the operating range. For instance, hot water tends to form a layer on top of cold water layer. This way, if the internal volume comprises water, a temperature gradient from bottom to top may be present in the internal volume from low to high temperatures. Having the thermal bridges at the bottom may thus minimize heat losses as the temperature difference at opposites ends of the thermal bridge *(i.e.* between the outer environment and the inner vessel) is typically less than the temperature difference between the outer environment and the inner vessel at a higher height.

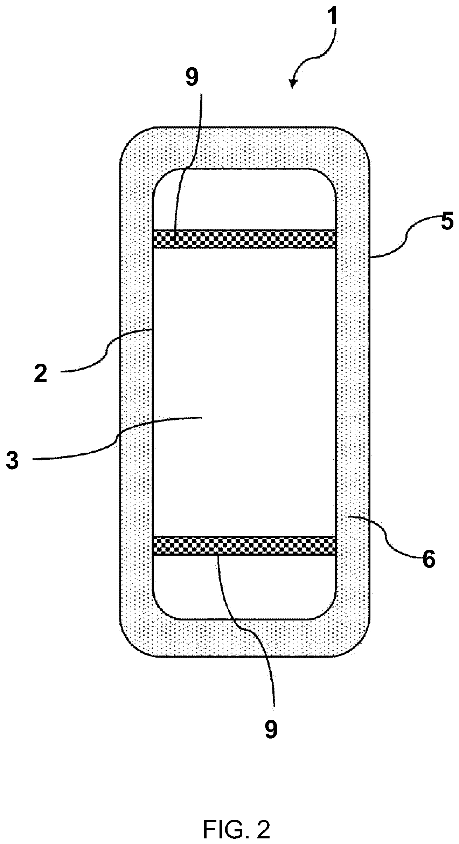

To maintain the temperature gradient in the internal volume, the inner vessel may further comprise a stratification device (9), as illustrated in Figure 2. Stratification herein is used to describe the phenomenon that layers of fluid can be formed based on the temperature of the fluid. The stratification device may be placed in the internal volume to ensure that the temperature gradient remains and by limiting turbulence and concomitant mixing of the warmer and colder fluid typically occurs. The stratification device may be any device known in the art, for instance a two directional stratification device such as one or more perforated plates. For instance, a first perforated plate may be placed at the top of the internal volume and a second perforated plate may be placed on the bottom of the internal volume (see Figure 2). Other stratification devices may include inlet stratification devices that allow the fluid to enter at the level in the internal volume where the temperature is similar to the incoming fluid.

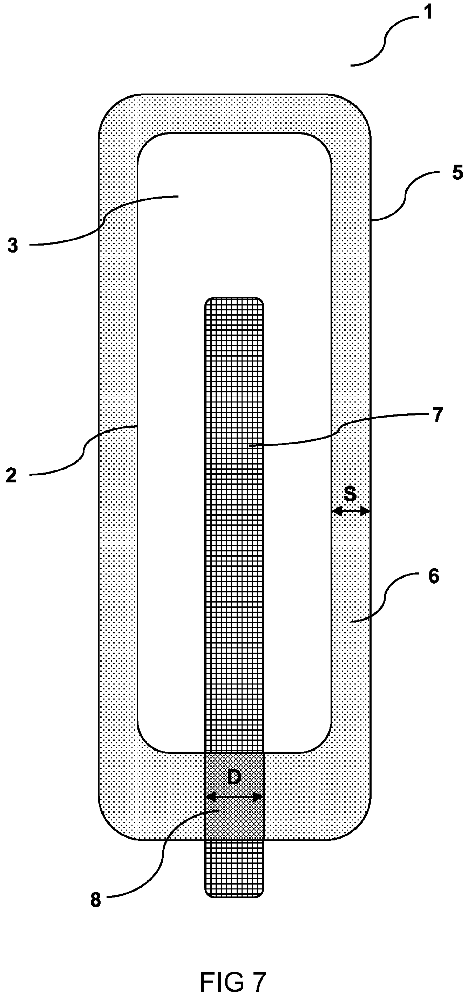

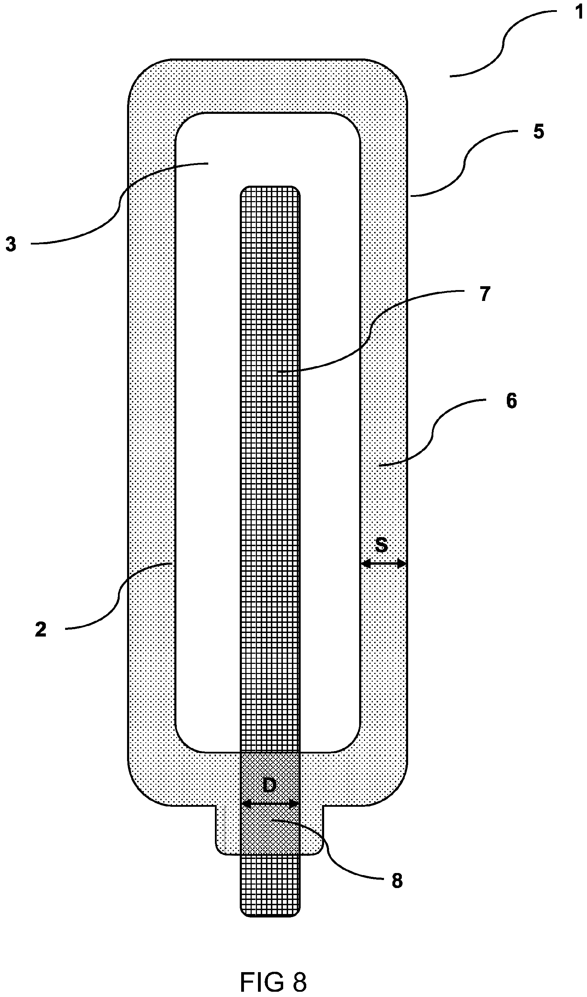

A further option to reduce heat losses, which may be employed alternatively, or additionally to the above-mentioned features, is locally and/or sectionally thickening the thermal insulation layer (6) as illustrated in Figure 8 and Figure 7, respectively. Local thickening of the thermal insulation layer is herein regarded as the thickening of said insulation layer near or around one or more of the thermal bridges individually. This allows for a higher local insulation compared to when such thickening would be absent. The thickness of the insulation layer is herein regarded as the crosssectional length of the insulation layer perpendicular to the wall of the inner container.

For instance, for a circularly shaped thermal bridge wall with outer diameter D and a thickness S of the thermal insulation layer without thickening *(i.e.* nominal thickness), the thermal insulation may be locally thickened in a circular shape around the thermal bridge. The thermal insulation layer is preferably thickened to the extent that the total thickness of the insulation layer *(i.e.* nominal thickness + thickening) at the site of thickening is between 1.5S to 3S, such as roughly 2S. The thickening may have a width (herein regarded as the radial extension perpendicular to the thermal bridge wall) with a total outer diameter of approximately D+2S *(i.e.* thermal bridge wall outer diameter + its surrounding thickened layer).

As the thermal bridges are located in the bottom 75% of the total height of the outer container or preferably even in the bottom 50% or 25%, the thermal insulation layer may also be sectionally thickened correspondingly in essentially the bottom 75%, 50%, or 25% of the total height of the outer container. This means that the sectional thickening is applied to the entity of a particular portion up from the bottom of the outer container (as illustrated in Figure 7). It also means that said thickening typically surrounds more than one thermal bridge. For embodiments wherein the thermal insulation layer is sectionally thickened, the thermal insulation layer is preferably thickened to obtain a total thickness of the thermal insulation layer (*i.e.* nominal thickness + thickening) at the site of thickening between 1.5S and 3S, such as 2S (wherein S is the thickness of the thermal insulation layer without thickening, *i.e.* nominal thickness).

Locally or sectionally thickening the thermal insulation layer is particularly beneficial for embodiments wherein a temperature gradient is present in the internal volume. By thickening the thermal insulation layer, the insulation can be increased such that the effective heat resistance of the bottom of the sensible heat storage apparatus (including the thermal bridges) to the environment is essentially identical to the effective heat resistance of the top of the apparatus (without thermal bridges) to the environment. This way, an essentially constant temperature gradient may be kept over time in the sensible heat storage apparatus.

Depending on the final use of the sensible heat storage apparatus, the internal volume may for instance be between 1 to 15000 liters, preferably between 10 and 1000 liters, more preferably between 50 and 500 liters, most preferably between 75 and 250 liters. It was found that the use of an integrated connection and the low location of thermal bridges is most beneficial for smaller internal volumes.

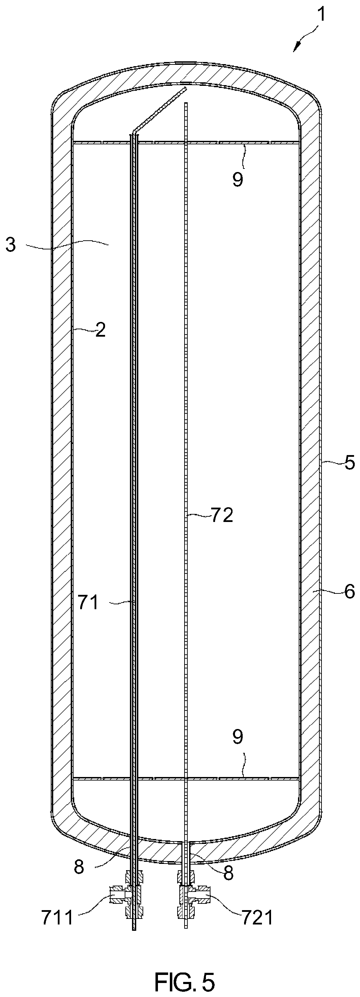

In a preferred embodiment as illustrated in Figure 5, the sensible heat storage apparatus comprises a stratification device (9) comprising two perforated plates, one close to the top of the internal volume, and one close to the bottom of the internal volume.

The preferred embodiment according to Figure 5, comprises the two integrated connections, the first (71) and the second integrated connection (72). The first integrated connection (71) may be adapted to integrate and accommodate a liquid port and a gas port. It is preferred that the gas port and liquid port are integrated in the first integrated connection via a co-axial pipe-in-pipe configuration, such as a configuration as illustrated in Figure 4A. Herein, it is further preferred that the liquid port forms the outer pipe (10) and the gas port forms the inner pipe (11). For instance, the liquid port may be used as an liquid outlet to obtain the fluid present in the internal volume and the gas port may be used as a deaeration port to degas the internal volume.

The second integrated connection (72) is preferably adapted to integrate and accommodate a liquid port and an entry point for a temperature sensor. Preferably the liquid port and entry point for a temperature sensor are integrated in said second integrated connection via a co-axial pipe-in-pipe configuration, as illustrated in for instance Figure 4A. It is further preferred that the liquid port forms an outer pipe (10) and said entry point for a temperature sensor forms an inner pipe (11). For instance, the entry point for a temperature sensor is used for entry of a thermocouple with six measuring points and the liquid port is used as liquid inlet for the feeding of the fluid to the internal volume.

As can be seen in Figure 5, the first and/or second integrated connection may further have a means (711, 721) to configure the preferred pipe-in-pipe configuration and to allow for attachment to *e.g.* an external system.

It may be particularly preferred that length of the gas port which is integrated and accommodated in the first integrated connection is longer than the liquid port integrated and accommodated in the first integrated connection. This length is determined as the length of the sub-connection that is present in the internal volume, thus the length measured starting from the inner wall to the end of the sub-connection in the internal volume. In other words, the length of the sub-connections may be equal or different, but the length in the internal volume is typically different such that the top of the gas port lies above the top of the liquid port. This is also illustrated in Figure 5, as the gas port herein extends beyond the liquid port. This is preferred as the gas port may be used as a deaeration port, for which is it typically required that the sub-connection reaches the optional gas or air present in the internal volume, which is generally above the fluid level. The liquid port may be used as a liquid inlet or outlet, for which it may be beneficial if the connection is submerged in the fluid optionally present in the internal volume.

Additionally or alternatively, the length of the first integrated connection (71) may be longer in the internal volume than the second integrated connection (72), as further illustrated in Figure 5. The length of an integrated connection is determined by the longest sub-connection *(i.e.* with the longest length in the internal volume) integrated and accommodated in the integrated connection. A short sub-connection between the internal volume and outer environment is typically sufficient as entry point for a temperature sensor and there may be no need to extend this sub-connection to the top of the internal volume. Nonetheless, the temperature sensor and preferably a thermocouple itself may reach into the internal volume, however this does not contribute to the length of the sub-connection. Similarly, as detailed above, a liquid port may be shorter of length than a gas port.

Further, as illustrated in Figure 5 as a specific example, in the embodiments wherein the sensible heat storage apparatus comprises two or more perforated plates as stratification devices, one plate is positioned in the bottom 50%, preferably bottom 25% of the of the total height of the inner vessel and at least one other plate is position in the top 50%, preferably top 25% of the total height of the inner vessel. Herein the total height of the inner vessel is meant as the total inner height of the wall of the inner vessel that encloses the inner volume. In addition, in such embodiments, it is preferred that one liquid port of the first and second integrated connection protrudes and ends into the inner volume above the highest positioned perforated plate while the other liquid port of the first and second integrated connection protrudes and ends below the lowest positioned perforated plate (as also illustrated in Figure 5). Such a configuration allows a two-directional fluid flow through both ports without causing undesirable amounts of turbulence. In other words, in such a confirmation, the fluid can be taken and provided from and through either fluid port and a reversal of the flow direction is thus possible.

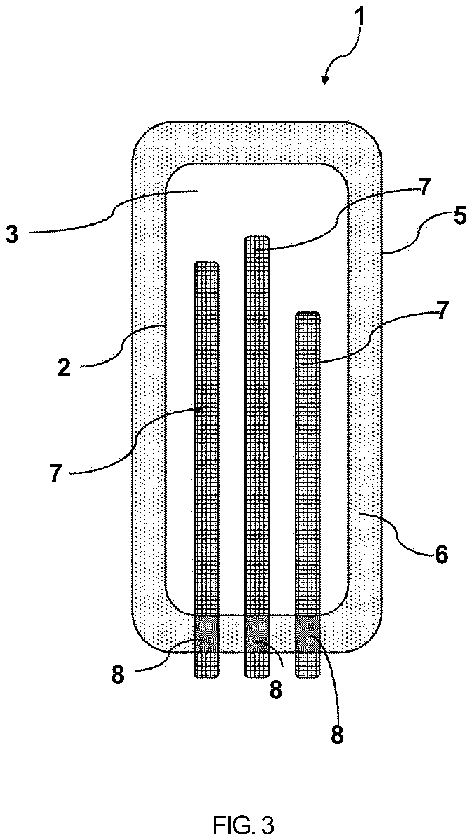

Another example of a sensible heat storage apparatus with integrated connections of different length is schematically illustrated in Figure 3 for three integrated connections (7).

The sensible heat storage apparatus according to the present invention may find its purpose in several applications such as in domestic and/or industrial hot water systems. The sensible heat storage may be used as a standalone apparatus or it may be combined with *i.a.* heat pump systems, gas boilers and other storage systems such as phase change material or thermochemical storage units. Accordingly, the present invention is further directed to a domestic and/or industrial hot water system comprising the sensible heat storage apparatus.

The method for operating the sensible heat storage apparatus may comprise a storage stage wherein the fluid maintains a storage temperature set by an optional charging stage or period during which heat to the fluid is provided and/or a pre-heated fluid is provided into the internal volume. Thus, in the optional charging stage, energy is provided to the internal volume. The method may further comprise an optional discharging stage wherein hot fluid is obtained from the internal volume of the inner vessel. The optional charging stage may comprise providing heat to the fluid, this may for instance be provided by an electrical heater that is present in the internal volume and connected to an electric feedthrough. Other means may include an internal heat exchanger such as a (nonelectric) heating coil. Alternatively or additionally, the optional charging stage may comprise providing a hot fluid. This hot fluid may be previously heated by an external system. The optional charging stage typically sets a storage temperature for the fluid to maintain, preferably this storage temperature is between 0 and 200 °C, preferably between 40 and 130 °C, more preferably between 50 and 95 °C. This temperature may be sufficiently high to be obtained from the internal volume during the optional discharging stage to be used for applications such as, but not limited to, domestic hot water, drinking water or as supply towards a fresh water station. For the purpose of clarity and a concise description features are described herein as part of the same or separate embodiments, however, it will be appreciated that the scope of the invention may include embodiments having combinations of all or some of the features described provided they are within the scope of the appended claims.

The invention may further be illustrated by the following nonlimiting examples.

### Example 1

A prototype sensible heat storage apparatus was built with a height of approximately 1200 mm of the outer container and two perforated plates as stratification device. The prototype has two integrated connections, wherein a first integrated connection integrates and accommodates a liquid port and a gas port, and a second integrated connection integrates and accommodates a liquid port and an entry for a temperature sensor. A thermocouple with 6 measuring points was used.

The total thermal energy stored in the sensible heat storage apparatus was determined by using the average temperature for each of the measuring points. Based on the position of the measuring points a different weight factor corresponding to the thermal mass around each measuring point was estimated with a confidence interval per estimation as shown in Table 1. Wherein Tag is used to describe the individual temperature measuring points.

**Table 1 - Estimated relative thermal mass around each measuring point in the sensible heat storage apparatus.**

| Tag | Estimated Relative Thermal Mass | | |
|---|---|---|---|
| | Min | Mid | Max |
| TI-0.11 | 5 | 10 | 15 |
| TI-0.12 | 15 | 23 | 30 |
| TI-0.13 | 15 | 23 | 30 |
| TI-0.14 | 15 | 23 | 30 |
| TI-0.15 | 15 | 23 | 30 |
| TI-0.16 | 5 | 10 | 15 |

The confidence interval for the resulting standing heat loss was calculated using Monte Carlo error analysis.

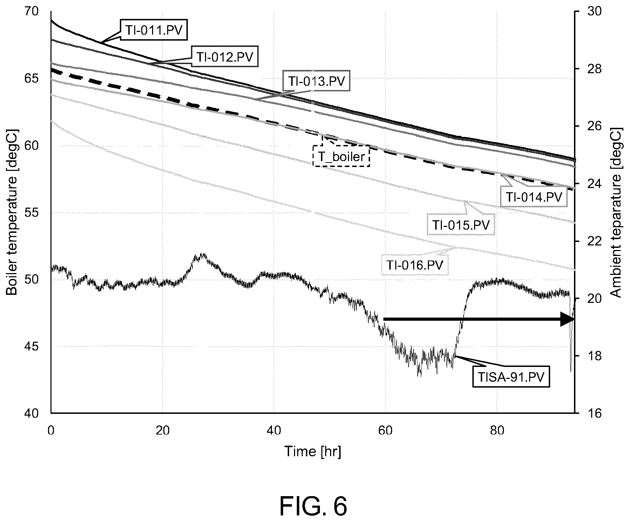

The results of the standing heat loss experiment are illustrated in Figure 6. In Figure 6, the T_boiler is the weighted mean temperature in the internal volume calculated using the mid estimation from Table 1. TI-0 1X.PV corresponds to the measuring points of the thermocouple in the internal volume and TISA-91.PV corresponds to the ambient temperature of the outer environment. The experiment was performed according to a norm as described in EU No. 812/2013, the energy labelling of water heaters, hot water storage tanks and packages of water heater and solar devices.. The test procedure was slightly altered and water was first run through an external heater and the internal volume of the sensible heat storage apparatus, once the water reached 70 °C the flow and heater were turned off.

From the data as shown in Figure 6, the average rate of temperature change was calculated from which the standing heat loss was calculated. The outcomes are presented in Table 2.

**Table 2. List of measured and calculated variables.**

| Variable | Value | Unit |
|---|---|---|
| Average ambient temperature | 20.1 ± 1.9 | °C |
| Average rate of temperature change | -0.095 ± 0.002 | °C hr⁻¹ |
| Assumed water volume | 106 | dm³ |
| Standing heat loss | 11.8 ± 0.2 | W |
| Energy Class A+ (lower and upper limit) | (0, 25.9) | W |

### Example 2 - Comparative example

The obtained heat loss was compared to existing boilers on the marked as shown in Table 3.

**Table 3. Short comparison of a sensible heat storage apparatus according to the present invention with boilers on the market.**

| Manufacturer | Model | Volume (dm³) | Electric heater | Energy label | Approximate heat losses [W] |
|---|---|---|---|---|---|
| Present applicant | According to Example 1 | 106 | False | A+(+) | 12 |
| OEG | Art. 516008170 | 157 | False | A+ | 28 |
| Valliant | uniStOR VIH R120/6 H | 117 | False | A | 27-37 |
| ACV | Smart 130 | 99 | True | B | 40 |
| Stiebel Eltron | Budget Line | 100 | True | C | 50-70 |
| Itho Daalderop | Combiconnect boiler 210 | 130 | True | D | 80 |

The heat losses of the boilers on the market are tested under ideal lab conditions.

## Claims

1. Sensible heat storage apparatus (1) comprising
- an inner vessel (2) comprising an internal volume (3) adapted to comprise a fluid (4);
- an outer container (5) enclosing said inner vessel;
- a thermal insulation layer (6) between said inner vessel and said outer container;
- at least a first integrated connection (71) and a second integrated connection (72) to connect the internal volume of said inner vessel to an outer environment through the thermal insulation layer; wherein said integrated connections are adapted to each integrate and accommodate at least two individual sub-connections such that every integrated connection forms a single thermal bridge (8) between the inner vessel and outer container and wherein all thermal bridges are located in the bottom 75% of the total height of said outer container;
wherein said first integrated connection is adapted to integrate and accommodate a liquid port and at least one further sub-connection; and wherein said second integrated connection is adapted to integrate and accommodate a liquid port and at least one further sub-connection.

2. Sensible heat storage apparatus according to the previous claim, wherein said internal volume (3) comprises a fluid (4), preferably wherein said internal volume comprises water.

3. Sensible heat storage apparatus according to any of the previous claims, wherein all thermal bridges (8) are located in the bottom 50%, more preferably in the bottom 25%, most preferably in the bottom 10% of the total height of said outer container (5).

4. Sensible heat storage apparatus according to any of the previous claims, wherein said inner vessel (2) comprises a stratification device (9), preferably wherein said stratification device comprises one or more perforated plates, preferably two or more perforated plates.

5. Sensible heat storage apparatus according to any of the previous claims, wherein said further sub-connections are independently selected from the group consisting of liquid ports such as heat coil in- and outlets, liquid inlets and liquid outlets, gas ports such as gas inlets and gas outlets, entry points for an anti-scaling device, entry points for a sensor, such as a temperature sensor, pressure sensor, magnetic field sensor , entry points for an electric heater and electric feedthroughs such as electricity in- and outlets for electrical heaters.

6. Sensible heat storage apparatus according to the previous claim, wherein said temperature sensor is a multi-point temperature sensor, preferably a thermocouple and/or a resistance temperature detector (RTD) device.

7. Sensible heat storage apparatus according to the previous claim, wherein said multi-point temperature sensor has at least two measuring points, more preferably at least four measuring points, even more preferably at least five measuring points, most preferably at least six measuring points.

8. Sensible heat storage apparatus according to any of the previous claims, wherein said thermal insulation layer (6) comprises a vacuum insulation element, preferably wherein said vacuum insulation element has a thermal conductivity in the range of 0.001 W/mK and 0.004 W/mK at a residual gas pressure in the range of 0.1 to 1 mbar and a mean temperature between 50 and 300 °C.

9. Sensible heat storage apparatus according to any of the previous claims, wherein said thermal insulation layer (6) is locally thicker around one or more thermal bridges and/or wherein the thermal insulation layer is sectionally thickened in essentially the bottom 75%, more preferably the bottom 50%, most preferably the bottom 25% of the total height of the outer container.

10. Sensible heat storage apparatus according to any of the previous claims, wherein said liquid port and at least one further sub-connection are integrated and accommodated in said first integrated connection (71) via a pipe-in-pipe configuration, preferably a co-axial pipe-in-pipe configuration and/or wherein said liquid port and at least one further sub-connection are integrated and accommodated in said second integrated connection (72) via a pipe-in-pipe configuration, preferably a co-axial pipe-in-pipe configuration.

11. Sensible heat storage apparatus according to any of the previous claims, wherein said internal volume (3) is between 1 to 15000 liters, preferably between 10 and 1000 liters, more preferably between 50 and 500 liters, most preferably between 75 and 250 liters.

12. Sensible heat storage apparatus according to any of the previous claims, wherein said inner vessel (2) and/or outer container (5) comprise stainless steel.

13. Sensible heat storage apparatus according to any of the previous claims, wherein said first integrated connection (71) is adapted to integrate and accommodate a liquid port and a gas port, preferably wherein said gas port and liquid port are integrated in said first integrated connection via a co-axial pipe-in-pipe configuration, preferably wherein said liquid port forms an outer pipe and said gas port forms an inner pipe;
and/or wherein said second integrated connection (72) is adapted to integrate and accommodate a liquid port and an entry point for a temperature sensor, preferably wherein said liquid port and entry point for a temperature sensor are integrated in said second integrated connection via a co-axial pipe-in-pipe configuration, preferably wherein said liquid port forms an outer pipe and said entry point for a temperature sensor forms an inner pipe.

14. Sensible heat storage apparatus according to the previous claim, wherein the length of said gas port integrated and accommodated in said first integrated connection (71) is longer than said liquid port integrated and accommodated in said first integrated connection in said internal volume and/or wherein the length of said first integrated connection is longer in said internal volume (3) than said second integrated connection (72).

15. Domestic and/or industrial hot water system comprising the sensible heat storage apparatus (1) according to any of the previous claims.

16. Method for operating the sensible heat storage apparatus (1) according to any of the claims 1-14 for storing heat, said method comprising a storage stage wherein the fluid maintains a storage temperature set by an optional charging stage comprising providing heat to the fluid and/or providing hot fluid, said method further comprising an optional discharging stage wherein hot fluid is obtained from said internal volume (3).

17. Method according to the previous claim, wherein the storage temperature is between 0 and 200 °C, preferably between 40 and 130 °C, more preferably between 50 and 95 °C.

## Patentansprüche

1. Speichereinrichtung (1) für fühlbare Wärme, umfassend:
- einen inneren Behälter (2), umfassend ein Innenvolumen (3), angepasst, um ein Fluid (4) zu umfassen;
- einen äußeren Container (5), umschließend den inneren Behälter;
- eine Wärmeisolationsschicht (6) zwischen dem inneren Behälter und dem äußeren Container;
- mindestens eine erste integrierte Verbindung (71) und eine zweite integrierte Verbindung (72), um das Innenvolumen des inneren Behälters durch die thermische Isolationsschicht mit einer äußeren Umgebung zu verbinden; wobei die integrierten Verbindungen angepasst sind, um jeweils mindestens zwei einzelne Unterverbindungen zu integrieren und aufzunehmen, sodass jede integrierte Verbindung eine einzelne Wärmebrücke (8) zwischen dem inneren Behälter und dem äußeren Container bildet, und wobei sich alle Wärmebrücken in den unteren 75 % der Gesamthöhe des äußeren Containers befinden;
wobei die erste integrierte Verbindung angepasst ist, um einen Flüssigkeitsanschluss und wenigstens eine weitere Unterverbindung zu integrieren und aufzunehmen; und wobei die zweite integrierte Verbindung angepasst ist, um einen Flüssigkeitsanschluss und wenigstens eine weitere Unterverbindung zu integrieren und aufzunehmen.

2. Speichereinrichtung für fühlbare Wärme nach dem vorhergehenden Anspruch, wobei das Innenvolumen (3) ein Fluid (4) umfasst, wobei das Innenvolumen vorzugsweise Wasser umfasst.

3. Speichereinrichtung für fühlbare Wärme nach einem der vorhergehenden Ansprüche, wobei alle Wärmebrücken (8) in den unteren 50 %, bevorzugter in den unteren 25 %, am bevorzugtesten in den unteren 10 % der Gesamthöhe des äußeren Containers (5) angeordnet sind.

4. Speichereinrichtung für fühlbare Wärme nach einem der vorhergehenden Ansprüche, wobei der innere Behälter (2) eine Stratifikationsvorrichtung (9) umfasst, wobei die Stratifikationsvorrichtung vorzugsweise eine oder mehr perforierte Platten umfasst, vorzugsweise zwei oder mehr perforierte Platten.

5. Speichereinrichtung für fühlbare Wärme nach einem der vorhergehenden Ansprüche, wobei die weiteren Unterverbindungen unabhängig ausgewählt sind aus der Gruppebestehend aus Flüssigkeitsanschlüssen wie Heizspiralenein- und -auslässen, Flüssigkeitseinlässen und Flüssigkeitsauslässen, Gasanschlüssen wie Gaseinlässen und Gasauslässen, Eintrittspunkten für eine kesselsteinverhütende Vorrichtung, Eintrittspunkten für einen Sensor wie einen Temperatursensor, Drucksensor, Magnetfeldsensor, Eintrittspunkten für ein elektrisches Heizgerät und elektrischen Durchführungen wie Stromeinund -auslässen für elektrische Heizgeräte.

6. Speichereinrichtung für fühlbare Wärme nach dem vorhergehenden Anspruch, wobei der Temperatursensor ein Mehrpunkttemperatursensor ist, vorzugsweise eine Thermoelement- und/oder eine Widerstandstemperaturfühler-(RTD-)Vorrichtung.

7. Speichereinrichtung für fühlbare Wärme nach dem vorhergehenden Anspruch, wobei der Mehrpunkttemperatursensor mindestens zwei Messpunkte, bevorzugter mindestens vier Messpunkte, noch bevorzugter mindestens fünf Messpunkte und am bevorzugtesten mindestens sechs Messpunkte aufweist.

8. Speichereinrichtung für fühlbare Wärme nach einem der vorhergehenden Patentansprüche, wobei die thermische Isolationsschicht (6) ein Vakuumisolationselement umfasst, wobei das Vakuumisolationselement vorzugsweise eine Wärmeleitfähigkeit im Bereich von 0,001 W/mK bis 0,004 W/mK bei einem Restgasdruck im Bereich von 0,1 bis 1 mbar und einer mittleren Temperatur zwischen 50 und 300 °C hat.

9. Speichereinrichtung für fühlbare Wärme nach einem der vorhergehenden Ansprüche, wobei die thermische Isolationsschicht (6) um eine oder mehrere Wärmebrücken lokal dicker ist und/oder wobei die thermische Isolationsschicht im Wesentlichen in den unteren 75 %, bevorzugter in den unteren 50 %, am bevorzugtesten in den unteren 25 % der Gesamthöhe des äußeren Behälters abschnittsweise verdickt ist.

10. Speichereinrichtung für fühlbare Wärme nach einem der vorhergehenden Ansprüche, wobei der Flüssigkeitsanschluss und mindestens eine weitere Unterverbindung in die erste integrierte Verbindung (71) über eine Rohr-in-Rohr-Konfiguration, vorzugsweise eine koaxiale Rohr-in-Rohr-Konfiguration, integriert und aufgenommen sind, und/oder wobei der Flüssigkeitsanschluss und mindestens eine weitere Unterverbindung in die zweite integrierte Verbindung (72) über eine Rohr-in-Rohr-Konfiguration, vorzugsweise eine koaxiale Rohr-in-Rohr-Konfiguration, integriert und aufgenommen sind.

11. Speichereinrichtung für fühlbare Wärme nach einem der vorhergehenden Ansprüche, wobei das Innenvolumen (3) zwischen 1 und 15000 Litern ist, vorzugsweise zwischen 10 und 1000 Litern, bevorzugter zwischen 50 und 500 Litern, am bevorzugtesten zwischen 75 und 250 Litern.

12. Speichereinrichtung für fühlbare Wärme nach einem der vorhergehenden Ansprüche, wobei der innere Behälter (2) und/oder der äußere Container (5) Edelstahl umfassen.

13. Speichereinrichtung für fühlbare Wärme nach einem der vorhergehenden Ansprüche, wobei die erste integrierte Verbindung (71) angepasst ist, um einen Flüssigkeitsanschluss und einen Gasanschluss zu integrieren und aufzunehmen, wobei der Gasanschluss und der Flüssigkeitsanschluss vorzugsweise in die erste integrierte Verbindung über eine koaxiale Rohr-in-Rohr-Konfiguration integriert sind, wobei vorzugsweise der Flüssigkeitsanschluss ein äußeres Rohr und der Gasanschluss ein inneres Rohr bildet;
und/oder wobei die zweite integrierte Verbindung (72) angepasst ist, um einen Flüssigkeitsanschluss und einen Eintrittspunkt für einen Temperatursensor zu integrieren und aufzunehmen, wobei vorzugsweise der Flüssigkeitsanschluss und der Eintrittspunkt für einen Temperatursensor in die zweite integrierte Verbindung über eine koaxiale Rohr-in-Rohr-Konfiguration integriert sind, wobei vorzugsweise der Flüssigkeitsanschluss ein äußeres Rohr bildet und der Eintrittspunkt für einen Temperatursensor ein inneres Rohr bildet.

14. Speichereinrichtung für fühlbare Wärme nach dem vorhergehenden Anspruch, wobei die Länge des Gasanschlusses, integriert und aufgenommen in die erste integrierte Verbindung (71), länger ist als der Flüssigkeitsanschluss, integriert und aufgenommen in die erste integrierte Verbindung im Innenvolumen , und/oder wobei die Länge der ersten integrierten Verbindung im Innenvolumen (3) länger ist als die zweite integrierte Verbindung (72).

15. Haushalts- und/oder Industriewarmwassersystem, umfassend die Speichereinrichtung (1) für fühlbare Wärme nach einem der vorhergehenden Ansprüche.

16. Verfahren zum Betreiben der Speichereinrichtung (1) für fühlbare Wärme nach einem der Ansprüche 1-14 zum Speichern von Wärme, wobei das Verfahren eine Speicherphase umfasst, wobei das Fluid eine Speichertemperatur aufrechterhält, die durch eine optionale Ladephase festgelegt wird, umfassend das Bereitstellen von Wärme für das Fluid und/oder das Bereitstellen von heißem Fluid, wobei das Verfahren ferner eine optionale Abgabephase umfasst, wobei heißes Fluid aus dem Innenvolumen (3) erhalten wird.

17. Verfahren nach dem vorhergehenden Anspruch, wobei die Speichertemperatur zwischen 0 und 200 °C, vorzugsweise zwischen 40 und 130 °C, bevorzugter zwischen 50 und 95 °C, ist.

## Revendications

1. Dispositif (1) de stockage de chaleur sensible comprenant :
- une cuve intérieure (2) comprenant un volume intérieur (3) adapté pour contenir un fluide (4) ;
- un conteneur extérieur (5) renfermant ladite cuve intérieure ;
- une couche d'isolation thermique (6) entre ladite cuve intérieure et ledit conteneur extérieur ;
- au moins un premier raccordement intégré (71) et un deuxième raccordement intégré (72) pour relier le volume intérieur de ladite cuve intérieure à un environnement extérieur à travers la couche d'isolation thermique ;
dans lequel lesdits raccordements intégrés sont adaptés pour intégrer et loger chacun au moins deux sous-raccordements individuels de telle sorte que chaque raccordement intégré forme un pont thermique unique (8) entre la cuve intérieure et le conteneur extérieur, et dans lequel tous les ponts thermiques sont situés dans les 75 % inférieurs de la hauteur totale dudit conteneur extérieur ;
dans lequel ledit premier raccordement intégré est adapté pour intégrer et loger un orifice de liquide et au moins un autre sous-raccordement ; et
dans lequel ledit deuxième raccordement intégré est adapté pour intégrer et loger un orifice de liquide et au moins un autre sous-raccordement.

2. Dispositif de stockage de chaleur sensible selon la revendication précédente, dans lequel ledit volume intérieur (3) comprend un fluide (4), de préférence dans lequel ledit volume intérieur comprend de l'eau.

3. Dispositif de stockage de chaleur sensible selon l'une quelconque des revendications précédentes, dans lequel tous les ponts thermiques (8) sont situés dans les 50 % inférieurs, plus préférentiellement dans les 25 % inférieurs, de la façon la plus préférentielle dans les 10 % inférieurs de la hauteur totale dudit conteneur extérieur (5).

4. Dispositif de stockage de chaleur sensible selon l'une quelconque des revendications précédentes, dans lequel ladite cuve intérieure (2) comprend un dispositif de stratification (9), de préférence dans lequel ledit dispositif de stratification comprend une ou plusieurs plaques perforées, de préférence deux ou plusieurs plaques perforées.

5. Dispositif de stockage de chaleur sensible selon l'une quelconque des revendications précédentes, dans lequel lesdits autres sous-raccordements sont choisis indépendamment dans le groupe constitué par des orifices de liquide tels que des entrées et sorties de serpentin d'échange thermique, des entrées de liquide et des sorties de liquide ; des orifices de gaz tels que des entrées de gaz et des sorties de gaz ; des points d'entrée pour un dispositif antitartre ; des points d'entrée pour un capteur, tel qu'un capteur de température, un capteur de pression, un capteur de champ magnétique ; des points d'entrée pour une résistance chauffante électrique ; et des traversées électriques telles que des entrées et sorties d'électricité pour des résistances chauffantes électriques.

6. Dispositif de stockage de chaleur sensible selon la revendication précédente, dans lequel ledit capteur de température est un capteur de température multipoint, de préférence un thermocouple et/ou un dispositif à détecteur de température à résistance (RTD).

7. Dispositif de stockage de chaleur sensible selon la revendication précédente, dans lequel ledit capteur de température multipoint comporte au moins deux points de mesure, plus préférentiellement au moins quatre points de mesure, encore plus préférentiellement au moins cinq points de mesure, de la façon la plus préférentielle au moins six points de mesure.

8. Dispositif de stockage de chaleur sensible selon l'une quelconque des revendications précédentes, dans lequel ladite couche d'isolation thermique (6) comprend un élément d'isolation sous vide, de préférence dans lequel ledit élément d'isolation sous vide présente une conductivité thermique dans la plage de 0,001 W/mK à 0,004 W/mK sous une pression de gaz résiduel dans la plage de 0,1 à 1 mbar et à une température moyenne comprise entre 50 et 300 °C.

9. Dispositif de stockage de chaleur sensible selon l'une quelconque des revendications précédentes, dans lequel ladite couche d'isolation thermique (6) est localement plus épaisse autour d'un ou de plusieurs ponts thermiques et/ou dans lequel la couche d'isolation thermique est épaissie par sections essentiellement dans les 75 % inférieurs, plus préférentiellement dans les 50 % inférieurs, de la façon la plus préférentielle dans les 25 % inférieurs de la hauteur totale du conteneur extérieur.

10. Dispositif de stockage de chaleur sensible selon l'une quelconque des revendications précédentes, dans lequel ledit orifice de liquide et au moins un autre sous-raccordement sont intégrés et logés dans ledit premier raccordement intégré (71) dans une configuration tube dans tube, de préférence une configuration tube dans tube coaxiale, et/ou dans lequel ledit orifice de liquide et au moins un autre sous-raccordement sont intégrés et logés dans ledit deuxième raccordement intégré (72) dans une configuration tube dans tube, de préférence une configuration tube dans tube coaxiale.

11. Dispositif de stockage de chaleur sensible selon l'une quelconque des revendications précédentes, dans lequel ledit volume intérieur (3) est compris entre 1 et 15 000 litres, de préférence entre 10 et 1 000 litres, plus préférentiellement entre 50 et 500 litres, de la façon la plus préférentielle entre 75 et 250 litres.

12. Dispositif de stockage de chaleur sensible selon l'une quelconque des revendications précédentes, dans lequel ladite cuve intérieure (2) et/ou ledit conteneur extérieur (5) comprennent de l'acier inoxydable.

13. Dispositif de stockage de chaleur sensible selon l'une quelconque des revendications précédentes, dans lequel ledit premier raccordement intégré (71) est adapté pour intégrer et loger un orifice de liquide et un orifice de gaz, de préférence dans lequel l'orifice de gaz et l'orifice de liquide sont intégrés dans ledit premier raccordement intégré dans une configuration tube dans tube coaxiale, de préférence dans lequel l'orifice de liquide forme un tube extérieur et l'orifice de gaz forme un tube intérieur ;
et/ou dans lequel ledit deuxième raccordement intégré (72) est adapté pour intégrer et loger un orifice de liquide et un point d'entrée pour un capteur de température, de préférence dans lequel l'orifice de liquide et le point d'entrée pour un capteur de température sont intégrés dans ledit deuxième raccordement intégré dans une configuration tube dans tube coaxiale, de préférence dans lequel l'orifice de liquide forme un tube extérieur et le point d'entrée pour un capteur de température forme un tube intérieur.

14. Dispositif de stockage de chaleur sensible selon la revendication précédente, dans lequel la longueur dudit orifice de gaz intégré et logé dans ledit premier raccordement intégré (71) est supérieure à celle dudit orifice de liquide intégré et logé dans ledit premier raccordement intégré dans le volume intérieur, et/ou dans lequel la longueur dudit premier raccordement intégré est supérieure, dans ledit volume intérieur (3), à celle dudit deuxième raccordement intégré (72).

15. Système d'eau chaude domestique et/ou industriel comprenant le dispositif (1) de stockage de chaleur sensible selon l'une quelconque des revendications précédentes.

16. Procédé d'exploitation du dispositif (1) de stockage de chaleur sensible selon l'une quelconque des revendications 1 à 14 pour stocker de la chaleur, ledit procédé comprenant une étape de stockage dans lequel le fluide maintient une température de stockage définie par une étape de charge optionnelle comprenant la fourniture de chaleur au fluide et/ou la fourniture de fluide chaud, ledit procédé comprenant en outre une étape de décharge optionnelle dans lequel du fluide chaud est obtenu à partir dudit volume intérieur (3).

17. Procédé selon la revendication précédente, dans lequel la température de stockage est comprise entre 0 et 200 °C, de préférence entre 40 et 130 °C, plus préférentiellement entre 50 et 95 °C.
